(19) **Europäisches Patentamt / European Patent Office / Office européen des brevets**

(11) **EP 4 583 046 A1**

(12) # EUROPEAN PATENT APPLICATION

(43) Date of publication:
**09.07.2025 Bulletin 2025/28**

(21) Application number: **24171525.9**

(22) Date of filing: **22.04.2024**

(51) International Patent Classification (IPC):
***G06T 7/00*** (2017.01)

(52) Cooperative Patent Classification (CPC):
**G06T 7/0012;** G06T 2207/10116;
G06T 2207/20081; G06T 2207/20084;
G06T 2207/30061

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.01.2024 US 202463616867 P**

(71) Applicant: **Siemens Healthineers AG**
**91301 Forchheim (DE)**

(72) Inventors:
• **BHAT, Sheethal**
  **90402 Nürnberg (DE)**
• **GEORGESCU, Bogdan**
  **Princeton, 08540 (US)**
• **MANSOOR, Awais**
  **Potomac, 20854 (US)**
• **GHESU, Florin-Cristian**
  **91083 Baiersdorf (DE)**
• **GRBIC, Sasa**
  **Plainsboro, 08536 (US)**

(74) Representative: **Kraus & Lederer PartGmbB**
**Thomas-Wimmer-Ring 15**
**80539 München (DE)**

(54) **IMAGE-TEXT DEEP NEURAL NETWORK ALGORITHM FOR PATCH-WISE PREDICTION OF PATHOLOGY FINDING**

(57)   Imaging data is processed in an image-text deep neural network, e.g., a vision transformer deep neural network. The image-text deep neural network also processes a text input indicative of a pathology. For each of multiple spatial patches within an observation region, a respective prediction of the presence or the absence of a finding of a pathology is provided.

FIG 1

**Description**

TECHNICAL FIELD

Various examples of the disclosure generally pertain to processing of medical imaging data using a deep neural network algorithm. Various examples of the disclosure specifically pertain to determining, for each of multiple spatial patches of the medical imaging data a prediction of a presence or an absence of a finding of a pathology in the respective patch.

BACKGROUND

Chest X-ray (CXR) abnormality analysis intends to provide accurate and reliable classification for diverse pathologies. For this, CXR images are analyzed to determine whether findings associated with a given pathology are present or absent in the CXR images.

CXR abnormality analysis has been implemented using artificial intelligence algorithms, e.g., as described in the following publications: (i) Manuela Daniela Danu et al. Generation of radiology findings in chest x-ray by leveraging collaborative knowledge. arXiv preprint arXiv:2306.10448, 2023; (ii) Florin C Ghesu et al. Quantifying and leveraging predictive uncertainty for medical image assessment. Medical Image Analysis, 68:101855, 2021; (iii) Jan Rudolph et al. Artificial intelligence in chest radiography reporting accuracy: added clinical value in the emergency unit setting without 24/7 radiology coverage. Investigative Radiology, 57(2):90-98, 2022.

It has been found that some pathologies such as pleural effusion can be reliably detected using AI algorithms, while other pathologies such as pneumothorax pose greater challenges due to their varying manifestations across patients. Thus, reference AI algorithms for CRX abnormality analysis have been found to offer limited accuracy.

In addition, state-of-the-art AI algorithms provide a classification result for the overall CXR image, indicating either the presence or absence of findings associated with the respective pathology in the CXR image. Such output has been found to be of limited use in the clinical practice. It is difficult for the medical practitioner to assess the relevance and/or reliability of the AI algorithm output.

SUMMARY

A need exists for advanced techniques of AI analysis of medical imaging data. Specifically, a need exists for advanced CRX abnormality analysis. A need exists for advanced techniques that overcome or mitigate at least some of the above-identified restrictions or drawbacks.

This need is met by the features of the independent claims. The features of the dependent claims define embodiments.

According to an aspect, a method includes obtaining medical imaging data. The medical imaging data images an observation region of a patient. The method also includes establishing a text prompt. The text prompt is indicative of a pathology. The method also includes processing the medical imaging data as a first input to an image-text deep neural network algorithm. The method also includes processing, as a second input to the image-text deep neural network algorithm, the text prompt. The image-text deep neural network algorithm provides, for each of multiple spatial patches within the observation region, a respective prediction of the presence or absence of a finding of the pathology in the respective spatial patch.

According to an aspect, a computer program or a computer program product includes program code. The program code can be executed by a processor. The processor, upon executing the program code, performs a method. The method includes obtaining medical imaging data. The medical imaging data images an observation region of a patient. The method also includes establishing a text prompt. The text prompt is indicative of a pathology. The method also includes processing the medical imaging data as a first input to an image-text deep neural network algorithm. The method also includes processing, as a second input to the image-text deep neural network algorithm, the text prompt. The image-text deep neural network algorithm provides, for each of multiple spatial patches within the observation region, a respective prediction of the presence or absence of a finding of the pathology in the respective spatial patch.

According to an aspect, a processing device is configured to execute a method. The method includes obtaining medical imaging data. The medical imaging data images an observation region of a patient. The method also includes establishing a text prompt. The text prompt is indicative of a pathology. The method also includes processing the medical imaging data as a first input to an image-text deep neural network algorithm. The method also includes processing, as a second input to the image-text deep neural network algorithm, the text prompt. The image-text deep neural network algorithm provides, for each of multiple spatial patches within the observation region, a respective prediction of the presence or absence of a finding of the pathology in the respective spatial patch.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a image-text deep neural network algorithm according to various examples.

FIG. 2 schematically illustrates a transformer encoder according to various examples.

FIG. 3 is a flowchart of a method according to various examples.

FIG. 4 schematically illustrates a combination of multiple patch feature embeddings according to various examples.

FIG. 5 is a flowchart of a method according to various examples.

FIG. 6 shows a CXR image, an associated ground-truth mask, an attention map, as well as patch-wise predictions according to various examples.

FIG. 7 schematically illustrates a processing device.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of processing medical imaging data of an observation region of a patient are disclosed. The medical imaging data may include a 2-D medical image. For instance, x-ray images or a computed tomography slice images or magnetic resonance tomography slice images can be processed. CXR images may be processed. Ultrasound images may be processed.

The observation region could be one of the following: pulmonary imaging data; cardio-thoracic imaging data; chest imaging data; cardio imaging data; to give just a few examples. Hereinafter, details will be primarily described in the context of a CRX abnormality analysis in which medical imaging data of the chest of a patient acquired using x-ray imaging is processed. However, the techniques disclosed herein are not limited to such CXR images can be readily applied to other types of medical imaging data, acquired using a different imaging modality and/or imaging another observation region and/or used for diagnosing another pathology.

According to the disclosed techniques, an AI algorithm is employed for processing the medical imaging data. According to various examples, a deep neural network algorithm is employed for processing the medical imaging data. A deep neural network algorithm (DNN) generally includes an input layer, multiple hidden layers, and an output layer. Each layer includes multiple interconnected nodes, also referred to as neurons, that process the respective input feature maps. Various types of layers can be used including fully connected layers, convolutional layers, recurrent layers, long short-term memory layers, gated recurrent unit layers, dropout layers, normalization layers, attention layers, pooling layers, residual layers. For instance, a convolution layer works by applying a kernels across the input feature map to obtain the output feature map. The kernel slides (or convolves) across the input feature map, thereby performing element-wise multiplication. Multiple layers can implement an encoder branch. An encoder branch processes input data through the series of hidden layers to reduce its dimensionality, transforming it into a compact representation known as a feature embedding (or simply embedding). This feature embedding captures the features of the input data in a lower-dimensional space. The DNN is parameterized in the training. Training the DNN includes optimizing its weights to minimize a loss which quantifies the difference between the predicted outputs of the DNN and the actual labels obtained from a ground truth. This optimization is commonly performed using gradient descent, a method that iteratively adjusts the weights in the opposite direction of the loss function's gradient. Backpropagation is an algorithm used for efficiently computing these gradients, propagating errors from the output layer back through the layers of the DNN towards the input layer. During this process, each weight is refined based on its contribution to the overall error, using the calculated gradients. Through repeated cycles of forward passes, backpropagation, and weight refinement, the DNN learns to make accurate predictions, evidenced by a decreasing loss value. The training is based on a training dataset including training samples. The training sample define the inputs and outputs of the DNN.

According to various examples, the DNN processes the medical imaging data. For this, the respective encoder branch (image encoder branch) can employ a vision transformer architecture. Next, details with respect to the vision transformer architecture will be explained. Further details of the vision transformer architecture - beyond the following explanation -are disclosed in Dosovitskiy, Alexey, et al. "An image is worth 16x16 words: Transformers for image recognition at scale." arXiv preprint arXiv:2010.11929 (2020). The vision transformer architecture of the encoder enables patch-wise processing of the imaging data. The imaging data is split into smaller, fixed-size, non-overlapping pieces (patches). Each patch may be encoded into a 1-D vector and transformed into a higher-dimensional space through a learnable linear projection. These input patch embeddings serve as the input to a transformer encoder, typically after being augmented by a position token indicative of their positioning in the imaging data. At the output of the transformer encoder, a global embedding that includes information from all patches is used for making the classification prediction, e.g., using a softmax or another classification layer. In detail: The input patch embeddings - before being input to the transformer encoder - may be combined with a class token. The class token may be a randomly initialized learnable parameter that can be considered as a placeholder for the classification task. The class token gathers information from the other patches while being processed in the transformer encoder. The transformer encoder is typically composed of two main layers: multi-head self-attention and multi-layer perceptron. The multi-layer perceptron includes two hidden layers with a Gaussian Error Linear Unit activation function in-between the hidden layers. Before passing input patch embeddings through these two layers, it is possible to apply layer normalization and after passing embeddings through both layers, a residual connection may be applied. The transformer encoder employs a self-attention mechanism that captures contextual information in the input data. The self-attention mechanism attends to different regions of the medical imaging data based on a key, query and value concept. The global embedding at the output of the transformer encoder is then obtained from the part of the output of the transformer encoder mapped to the class token at the input. Also, patch embeddings are available at the output of the transformer encoder. Each patch embedding encodes features included in the respective image patch. For a global, image-wide classification, those patch embeddings are not employed further; however, according to the disclosed techniques they can be employed for providing patch-wise predictions regarding the presence and the absence of a finding of the pathology in each patch.

As will be appreciated from the above, the DNN includes an image encoder branch for processing the medical imaging data. In some examples, another encoder branch can be provisioned, for encoding a text input. This is the text encoder branch.

According to various examples, an image-text DNN is employed for processing, as a first input, the medical imaging data. The medical imaging data is processed in the image encoder branch, e.g., employing the vision transformer architecture as described above. A second input is a text prompt. The text prompt is indicative of a pathology. Via the text prompt, the image-text DNN can be prompted to provide a prediction or multiple predictions associated with whether one or more findings associated with that indicated pathology of present or absent in the medical imaging data. The text prompt configures the type of the prediction. For instance, such text prompt could be "finding of pleural effusion" or "finding of pneumothorax" or "finding of infiltration", or "no finding of pleural effusion", etc. If only a single pathology has been trained, it suffices if the text prompt is indicative of "finding" or "no finding", because the pathology is then implicit to the text prompt. As a general rule, the text prompt may or may not be fixedly predefined.

The image-text DNNs determines a first feature embedding based on the imaging data using an image encoder branch; the image-text DNN also determines a second feature embedding based on the text prompt using a text encoder branch. The outputs of the image and text encoder branches may then be compared, to yield a prediction or multiple predictions.

Such image-text DNNs that are capable of jointly processing a text input as well as an image input are, in principle, known in the state of the art, see, e.g., Alec Radford et al. Learning transferable visual models from natural language supervision. In International conference on machine learning, pages 8748-8763. PMLR, 2021. Image-text DNNs (DNNs) have also been employed for processing medical imaging data, see Ekin Tiu et al. Expert-level detection of pathologies from unannotated chest x-ray images via self-supervised learning. Nature Biomedical Engineering, 6(12):1399-1406, 2022.

According to examples, the image encoder branch of the image-text DNN has a vision transformer architecture, as previously discussed above. Such image-text DNNs employing the vision-transformer architecture have certain advantages. Firstly, during the inference phase, enable a zero-shot classification, i.e., classification with respect to a previously unseen class specified via the text-prompt. Secondly, during the training phase, unsupervised learning is enabled. Unsupervised learning does not rely on ground-truth being available in the training dataset. Thus, time-expensive and costly and also error-prone manual annotation by domain experts is not required.

The image-text DNN enables the unsupervised learning by using, in the training, a contrastive training process based on a training dataset that is based on pairs of medical imaging data - for the respective image input - with medical reports - for the text input - readily available in medical databases. In general, a contrastive training process contrasts positive pairs (similar or related data points) against negative pairs (dissimilar or unrelated data points). A contrastive training process refines the weights of the DNN to embed positive pairs closer together in the feature embedding space, while pushing negative pairs further apart. Through this process, the DNN learns to capture the essential features that define the similarities and differences among the training samples, leading to robust and discriminative representations useful for various downstream tasks. In detail, given a training dataset of $N$ (image, text) training samples - here pairs of imaging data and text prompts - , the image-text DNN is trained to provide a prediction on which of the $N \times N$ possible (image, text) pairings actually occurred as training samples across the training dataset. To do this, the image-text multi-modal feature embedding space is learnt by jointly refining the weights of the image encoder branch and text encoder branch to maximize the cosine similarity of the first and second feature embeddings of the $N$ training pairs while minimizing the cosine similarity of the embeddings of the $N^2$ - $N$ incorrect pairings. A symmetric cross entropy over these similarity scores is optimized in the training, by refining the weights of the image-text DNN.

According to various examples, the image-text DNN is augmented to not only provide an image-wide / global classification prediction regarding the absence or presence of a finding associated with the pathology in the medical imaging data, e.g., as in the above-identify prior art document of Alec Radford et al. According to various examples, the image-text DNN provides multiple predictions of presence or absence of a finding of the pathology in each of multiple spatial patches within the observation region depicted by the medical imaging data.

In other words, localization information regarding absence or presence of findings of a certain pathology is provided. In other words and more generally, the global classification output of the image-text DNN (i.e., whether there is any finding of the pathology irrespective of its position) is accompanied by localization information for that finding.

It has been found that medical practitioners can make better use of such spatial information provided by the AI CXR abnormality analysis if compared to a mere classification result. In particular, such spatial information enables the medical practitioner to understand why the AI model comes to the particular classification result, i.e., provides an indication of the underlying reasoning. Furthermore, the spatial information enables the medical practitioner to validate the output of the AI model.

To enable such patch-wise prediction of the presence or absence of the finding of the pathology, the patch embeddings encoding features of each patch of the medical imaging data are also compared against the text embedding (in addition to the comparison between the global embedding encoding features of all patches). In detail, for each spatial patch, the image-text DNN determines the respective prediction of the presence or absence of the finding of the pathology in that patch based on a respective comparison of the respective patch feature embedding with the text feature embedding. For instance, the comparison may be implemented by a correlation. The comparison may be implemented by a dot product between the respective vectors defining the two embeddings compared with each other. A fully connected layer may be used.

To enable such patch-wise processing of the medical imaging data in the image-text DNN, it is also possible to augment the training of the image-text DNN. A patch-wise loss can be relied upon. This patch-wise loss is enabled by the availability of a ground-truth mask for each medical imaging data in a training dataset. The ground-truth mask also includes localization information regarding the presence or absence of the finding of the pathology. For instance, a binary ground-truth mask may be used that discriminates between regions in the medical imaging data that do not include the finding and other regions in the medical imaging data that include the finding.

As a general rule, the spatial resolution of the ground-truth mask does not necessarily need to equate to the spatial resolution defined by the spatial patches into which the medical imaging data is split. For instance, if the spatial resolution defined by the spatial patches deviates from the spatial resolution of the ground-truth mask, interpolation may be used to derive a label for calculation of the patch-wise loss for each spatial patch from the ground-truth mask. Spatial thresholding may be used if the ground-truth mask is indicative, for a given patch, of a first subregion associated with "no finding" as well as of a second subregion associated with "finding".

The patch-wise loss is calculated, for a given training example of a training dataset, based on a difference between the ground-truth mask and respective comparisons of the patch feature embeddings and the text feature embedding. The patch-wise loss can be a patch-wise cross-entropy loss. In other words: considering a given spatial patch of the medical imaging data: For that given spatial patch, a respective comparison of the respective patch feature embedding and the text feature embedding is calculated. The output of that comparison is then compared against the label derived from the ground-truth mask in the respective region. For instance, if the text feature embedding encodes "finding present" while the label derived from the ground-truth mask in the respective region is indicative of "finding absent", the weights in the image-text DNN are refined to obtain a better match. On the other hand, if the text feature embedding encodes "finding present" by the label derived from the ground-truth mask in the respective region is also indicative of "finding present", the weights in the image-text DNN may not be refined or may be reinforced in the same direction, depending on the particular optimization used in the training.

As will be appreciated from the above, for calculating the patch-wise loss, a ground-truth mask indicative of localization information regarding the presence or the absence of the finding of the pathology is required. As a general rule, such localization information consulting the ground-truth mask may be comparatively costly and/or difficult to prepare. For instance, manual annotation processes may be required in which a domain expert creates the ground-truth masks. To mitigate the need for extensive training datasets, a two-step training is implemented in some examples: here, in an initial training an initial training dataset is used that includes training samples not including localization information, i.e., specifically not including a ground-truth mask indicative of the presence of the absence of the finding of the pathology in various regions of the observation region captured by the medical imaging data. In the initial training, the patch-wise loss may not be used. The patch-wise loss may only be used in the subsequent fine-tuning training. The fine-tuning training operates based on another training dataset that includes training samples that also include the ground-truth mask. The fine-tuning training refines weights of the image-text DNN that have been previously adjusted based on the initial training. The fine-tuning training adds the ability to the image-text DNN to provide multiple patch-wise predictions. After the initial training, the image-text DNN does not have the ability to provide reliable patch-wise predictions. Typically, the number of training samples included in the fine-tuning training dataset is significantly smaller than the number of training samples included in the initial training dataset. For instance, the number of training samples included in the initial training dataset may be larger at least by a factor of thousand if compared to the number of training samples included in the fine-tuning training dataset. This enables predominantly training the image-text DNN in an unsupervised manner; and only refining the weights using supervised training based on a relatively small fine-tuning training dataset.

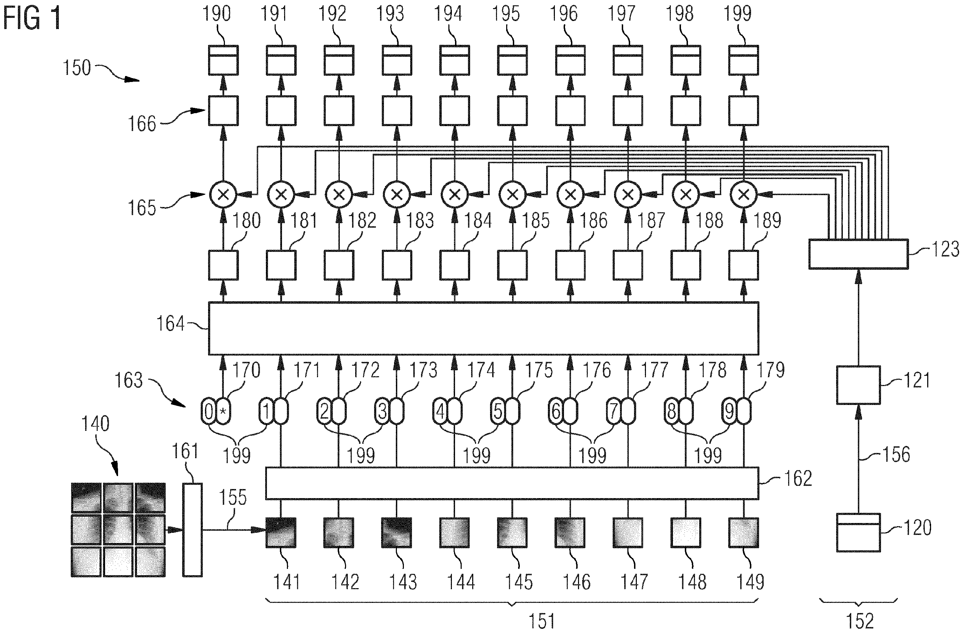

FIG. 1 schematically illustrates an image-text DNN 150. The image-text DNN 150 includes an image encoder branch 151 and a text encoder branch 152. The image encoder branch 151 processes a first input 155 and the text encoder branch 152 processes a second input 156. The first input 155 accepts medical imaging data 140. The second input 156 accepts a text prompt that is indicative of a pathology.

In detail, as illustrated in FIG. 1, before processing the medical imaging data 140, a downscaling module 161 is configured to reduce the resolution of the medical imaging data 140. The downscaling module 161 is optional. The downscaling module 161 may include weights refined in a machine-during training, i.e., may include one or trainable layers. It may also be implemented using a conventional non-AI downscaling algorithm. By using the downscaling module, the size of the layers of the DNN 150 can be reduced. This enables computationally efficient inference.

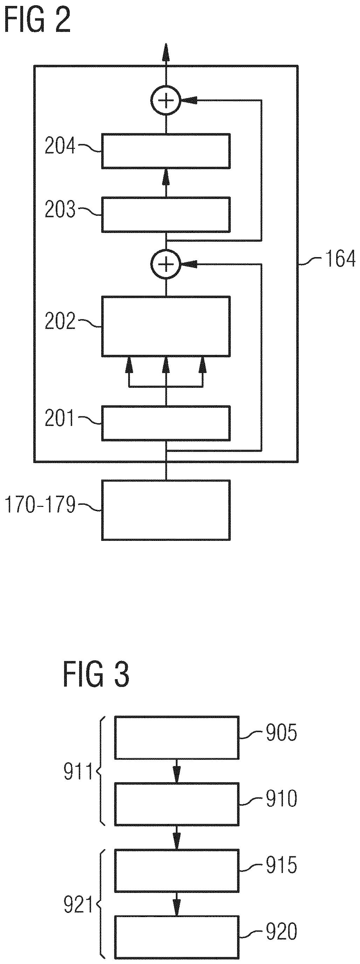

The medical imaging data 140 (optionally after downscaling) is split into multiple spatial patches 141-149. The multiple patches 141-149 are nonoverlapping and include a respective subregion of the overall medical imaging data 140. The patches 141-149 are then processed in a module 162 that determines input feature embeddings 171-179. Each input feature embedding 171-179 encodes one of the patches 141-149. The module 162 determines a linear projection and flattens each of the spatial patches 141-149. There is also a class token 170. Each of the class token 170 and the input spatial patches 171-179 is concatenated with a respective position indication 199 is then fed to a transformer encoder 164. The transformer encoder 164 is shown in further detail in FIG. 2 and includes a normalization layer 201, a multi-head attention module 202, another normalization layer 203, and a multilayer perceptron 204.

Referring again to FIG. 1: the transformer encoder 164 outputs a global feature embedding 180 associated with the class token 170. The global feature embedding 180 includes information from all spatial patches. The global feature embedding thus encodes features of the entire medical imaging data 140. The transformer encoder 164 also outputs multiple patch feature embeddings 181-189. Each of the patch feature embeddings 181-189 includes features associated with one respective spatial patch 141-149.

Each of the feature embeddings 180-189 is compared against a text feature embedding 123. The text feature embedding 123 is obtained from encoding, at the encoder module 121 of the text encoder branch 152, a text prompt 120. The text feature embedding 123 encodes "finding present for pathology XYZ". Alternatively, the text feature embedding 123 may encode "finding absent for pathology XYZ". The pathology XYZ may be fixedly predefined; in which case also the text prompt 120 can be fixedly predefined. The pathology XYZ may also be dynamically set by a user. In latter case, the text prompt 120 can be dependent on a user input. For instance, a user may select the particular pathology for which the predictions 190-199 are to be inferred, from a list of candidate pathologies, e.g., presented in a graphical user interface.

The result of each of these comparisons 165 is then processed in a classification module 166 to obtain a respective prediction 190-199. The prediction 190 - associated with the global feature embedding 180 - is a global prediction indicative of the presence or absence of the finding of the pathology in the medical imaging data 140 as a whole. Differently, each of the predictions 191-199 is a local prediction indicative of the presence or absence of the finding of the pathology in that respective spatial patch 141-149.

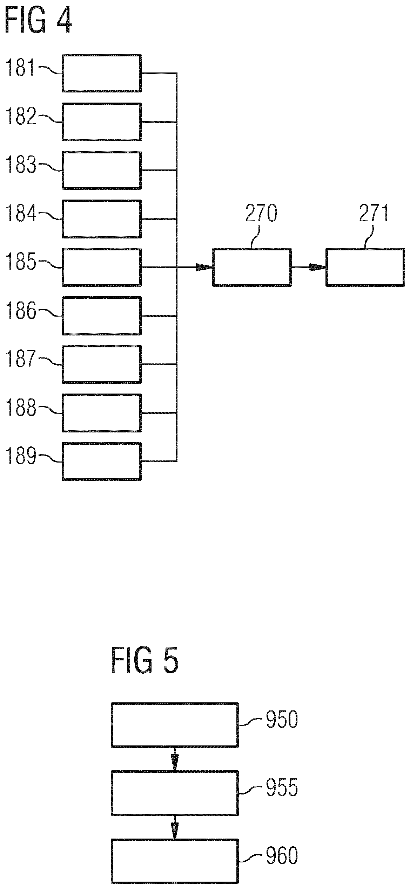

FIG. 3 is a flowchart of a method according to various examples. The method of FIG. 4 can be executed by a processor, upon loading program code from a memory and executing the program code. The method of FIG. 4 generally pertains to the training of an image-text DNN such as the image-text DNN 150 illustrated in FIG. 1.

The training includes two stages: an initial training 911 implemented by boxes 905, 910; as well as a fine-tuning training 921 implemented by the boxes 915, 920.

At box 905, an initial training dataset is obtained. The initial training dataset includes training samples. Each training sample includes a pair of a respective medical imaging data, e.g., a chest x-ray image, and an associated text prompt, e.g., a medical report previously drawn up by a practitioner for the medical imaging data (these medical reports may be pre-processed to include the impression and the findings and a default context length). The text prompt is indicative of a pathology. For instance, the text prompt can be indicative of whether a certain pathology has been diagnosed or not diagnosed based on the medical imaging data.

At box 910, the initial training of the image-text DNN is executed using the initial training dataset as obtained at box 905. Box 910 may be implemented as an unsupervised initial training.

The initial training is based on a global loss - referred to as $L_{global}$. The global loss compares - e.g., using a cosine similarity - the global embedding 180 to the text feature embedding 123. Unsupervised learning can be implemented using a contrastive training process, as previously explained.

In addition to this global loss $L_{global}$ operating based on the global embedding 180 a further global loss $L_{lcl}$ is calculated based on a combination of each of the patch feature embeddings 181-189, as illustrated in FIG. 4. A combination module 270 - e.g., implemented by a fully connected layer, implementing a linear combination of the patch feature embeddings 181-189 - is used to determine a combination of the patch feature embeddings 181-189. This combination 271 can then be compared against the text feature embedding 123, e.g., using again a contrastive training process and a cosine similarity. This additional global loss $L_{lcl}$ based on the combination 271 of the patch embeddings 181-189 primes the patch feature embeddings to better respond to the text prompts during the subsequent fine-tuning training, explained next.

Referring to FIG. 3 again: At box 915, a fine-tuning training dataset is obtained. The fine-tuning training dataset includes multiple respective training samples. Each training sample of the fine-tuning training dataset includes a triplet of respective medical imaging data, e.g., chest X-ray image, and associated text prompt, e.g., a medical report previously drawn up by a practitioner for the medical imaging data (these medical reports may be preprocessed to include the impression and the findings and the default context length), as well as a ground-truth mask that labels spatial patches of the observation region depicted by the medical imaging data regarding the presence or the absence of the finding of the respective pathology in each spatial patch.

Typically, the number of training samples in the fine-tuning training dataset of box 915 is significantly smaller (e.g., by a factor of 1000 or even more) than the number of training samples in the initial training dataset of box 905. This is because the availability of ground-truth masks is typically limited due to the time expensive and highly specialized task of their preparation in a manual annotation process by a domain expert.

Then, at box 920, the fine-tuning training is executed using the fine-tuning training dataset obtained at box 915.

The fine-tuning training can be based on both global losses $L_{lcl}$ and $L_{global}$ previously explained in box 915.

In addition, a patch-wise "local" loss is used to refine the weights of the image-text DNN in box 920. This patch wise loss is calculated, for a given training sample of the fine-tuning training dataset obtained at box 915, based on a difference between the ground-truth mask and the result of the comparisons 165 between the patch feature embeddings 181-189 and the text feature embedding 123. In detail, for each of the comparisons 165, the respective result is compared against the information included at that respective region corresponding to the associated patch 141-149 in the ground-truth mask. The total fine-tuning loss function is mathematically denoted as,

$$L_{total} = L_{global} + L_{lcl} + L_{patch}, \qquad (1)$$

where $L_{global}$ is the global loss, resulting from the correlation 165 of the global feature embedding 180 to the text feature embedding 123. $L_{lcl}$ is the correlation loss of the linear combination 271 of the patch feature embeddings 181-189 to the text feature embedding 123 . The patch-wise loss $L_{patch}$ is given as

$$L_{patch} = \sum_{n=1}^{N} CE(P_{logits,n}, G_{\theta}), \qquad (2)$$

$$P_{logits,n} = P_{\theta,n} \times T_{\theta}, \qquad (3)$$

where $N$ is the total number of patches (in FIG. 1 there are nine patches 141-149), CE indicates the cross-entropy loss function with ground-truth labels $\in \{0,1\}$ denoted as $G_{\theta,n}$ and $P_{logits,n}$ denotes the $n^{th}$ logit output of the patch feature embedding, after the $P_{\theta,n}$ embedding is compared or specifically correlated (FIG. 1: comparisons 165) to the text embedding $T_{\theta}$ 123. $T_{\theta}$ is a $1 \times 2$ tensor that contains the text embedding for "Finding" and "No Finding". Thus, more generally, the patch-wise loss is computed based on the sum of the comparison between the patch feature embeddings and the text feature embedding, i.e., the sum of these logits.

As a general rule, the initial training dataset obtained at box 905 and the fine-tuning training dataset obtained at box 915 may be limited to a single pathology, e.g., "pleural effusion". This means that the medical imaging data and the associate medical reports may be pre-filtered to only include information associated with that single pathology. In such a case, during subsequent inference, the text prompt may be limited to providing predictions associated with that single pathology. In some other scenarios, the initial training dataset obtained at box 905 in the fine-tuning training dataset obtained at box 915 may not be limited to a single pathology. Multiple different pathologies may be represented in the training samples of those training datasets. Then, different text prompts used during the subsequent inference can be used to obtain predictions for one of those candidate pathologies.

FIG. 5 is a flowchart of a method according to various examples. The method of FIG. 5 can be executed by a processor, upon loading program code from a memory and executing the program code. The method of FIG. 5 generally pertains to the inferring an image-text DNN such as the image-text DNN 150 illustrated in FIG. 1. The method of FIG. 35 can build upon the method of FIG. 3. I.e., the image-text DNN 150 is trained using the method of FIG. 3 and then inferred using the method of FIG. 5.

At box 950, a medical imaging dataset of an observation region of the patient is obtained. The medical imaging dataset may be a chest x-ray image.

For instance, the medical imaging dataset may be loaded from a memory. The medical imaging dataset may be obtained from a medical imaging apparatus, e.g., an x-ray apparatus for the above example of the chest X-ray image. Other medical imaging apparatuses that may acquire the medical imaging dataset and provided the medical imaging dataset for the AI analysis include, but are not limited to: CT apparatus; MRT apparatus; Positron Emission Tomography (PET) apparatus. The medical imaging dataset may be loaded from a picture archiving system or medical imaging database.

At box 955, a text prompt is established. The text prompt may specify the particular pathology in case the image-text DNN has been trained to discriminate between multiple pathologies. This selection may be based on a user input. The text from may be predefined in case there is no capability to discriminate between multiple pathologies, because the training has been limited to a single pathology.

At box 960, the medical imaging dataset obtained at box 950 is processed as a first input to the image-text DNN. Also, the text from this processed as a second input to the image-text DNN. The image-text DNN provides for each of multiple spatial patches within the observation region, a respective prediction of the presence or absence of a finding of the pathology in the respective spatial patch. The medical imaging dataset is processed in multiple spatial patches. Accordingly, box 960 can include splitting the medical imaging dataset into multiple spatial patches that are then processed as separate instances of the first input. At box 950, the patch-wise logits of Eq. 3 are calculated and used to classify the presence or absence of the finding for each spatial patch through a softmax or another classifier operation (cf. FIG. 1: classification module 166).

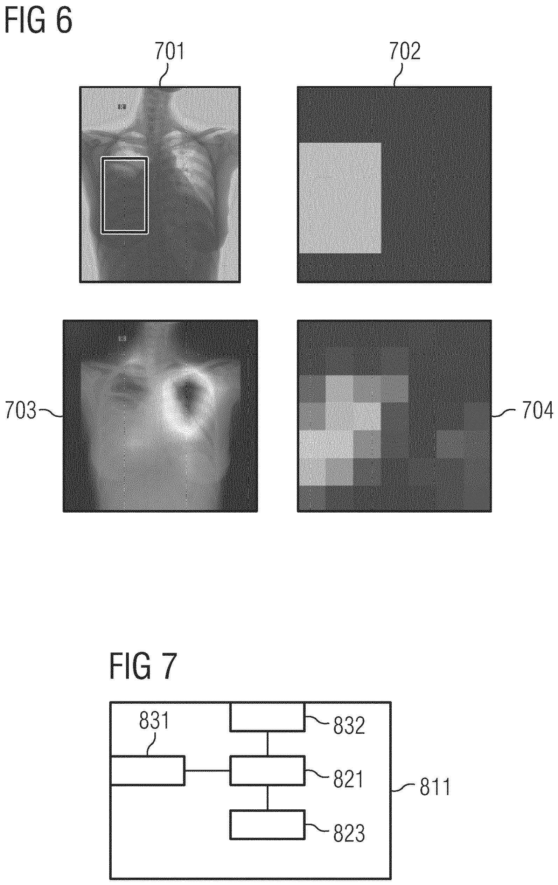

FIG. 6 illustrates an example medical imaging data 701, here in the form of a CXR image. Also illustrated in FIG. 6 is an example ground-truth mask 702 defining a certain subregion of the observation region captured by the CXR image 701 in which the finding of the pleural effusion is present. Furthermore, illustrated is a plot 704 of the patch-wise predictions 191-199 (arranged in accordance with the position of the associated spatial patches 141-149 in the observation region). As can be seen from the comparison of the ground-truth mask 702 with the plot 704, the image-text DNN 150 accurately provides the predictions 191-199, highlighting the lower left lung as being affected. As a reference, a state-of-the-art attention map 703 obtained for the global prediction 190 is shown. The attention map 703 wrongly locates the finding in the right lung. Such state-of-the-art attention map 703 is determined by analyzing the self-attention weights in the transformer encoder 164 assigned to different patches 141-149. These self-attention weights are then transformed into an attention map, highlighting areas of the image that are deemed most relevant for the global classification prediction 190.

FIG. 7 schematically illustrates a processing device 811. The processing device 811 includes a processor 821 and the memory 823. The processor 821 can load program code that is stored in the memory 823 and execute the program code. Upon executing the program code, the processor 821 performs techniques as disclosed herein, e.g., obtaining medical imaging data, e.g., via a communication interface 831 from a medical imaging device or from a picture archiving database; establishing a text prompt, e.g., based on user input obtained via a human machine interface 832 or by loading the text from the memory 823; processing the text prompt and the medical imaging data in a DNN; training the DNN using one or more losses; etc.

Summarizing, an image-text DNN is used for self-supervised learning from large-scale training datasets, extracting maximal information through multi-modal learning. This enables the learning of key encodings of medical imaging data by correlating to the associated text information. Techniques have been disclosed that enable aligning patch feature embedding outputs of the image encoder branch, to the text feature embeddings. A patch-wise loss function is disclosed.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For instance, while techniques have been disclosed for the purpose of processing medical imaging data, also other types of imaging data can be processed using the disclosed techniques. Examples include 2-D images of mechanical parts, semiconductors, satellite images, camera images, etc.

List of Reference

| | |
|---|---|
| text prompt | 120 |
| encoder module | 121 |
| text feature embedding | 123 |
| medical imaging data | 140 |
| Deep neural network | 150 |
| image encoder branch | 151 |
| text encoder branch | 152 |
| first input | 155 |
| second input | 156 |
| module | 161 |
| module | 162 |
| transformer encoder | 164 |
| comparison | 165 |
| classification module | 166 |
| class token | 170 |
| global feature embedding | 180 |
| prediction | 190 |
| position indication | 199 |
| normalization layer | 201 |
| multi - head attention module | 202 |
| normalization layer | 203 |
| multilayer perceptron | 204 |
| combination module | 270 |
| combination | 271 |
| image | 701 |
| ground - truth mask | 702 |
| attention map | 703 |
| plot | 704 |
| processing device | 811 |
| processor | 821 |
| memory | 823 |
| communication interface | 831 |

(continued)

| | |
|---|---|
| human machine interface | 832 |
| box | 905 |
| box | 910 |
| initial training | 911 |
| box | 915 |
| box | 920 |
| fine - tuning training | 921 |
| box | 950 |
| box | 955 |
| box | 960 |

**Claims**

1. A method, comprising:

   - obtaining (950) medical imaging data (140) of an observation region of a patient,
   - establishing (955) a text prompt (120) indicative of a pathology,
   - processing (960), as a first input (155) to an image-text deep neural network algorithm (150), the medical imaging data (140) and further processing, as a second input (156) to the image-text deep neural network algorithm (150), the text prompt (120),

   wherein the image-text deep neural network algorithm (150) provides, for each of multiple spatial patches (141-149) within the observation region, a respective prediction (191-199) of a presence or absence of a finding of the pathology in the respective spatial patch (141-149).

2. The method of claim 1,
   wherein the image-text deep neural network algorithm (150) determines, for each of the multiple spatial patches (141-149), a respective patch feature embedding (181-189) and further determines a text feature embedding (123) based on the text prompt (120), wherein the image-text deep neural network algorithm (150) determines the respective prediction (191-199) for each of the multiple spatial patches (141-149) based on a comparison (165) of the respective patch feature embedding (181-189) with the text feature embedding (123).

3. The method of claim 1 or 2,
   wherein the image-text deep neural network algorithm (150) further provides, for the medical imaging data (140), a global prediction (190) of a presence or absence of a finding of the pathology in the medical imaging data (140).

4. The method of any one of the preceding claims, further comprising:

   - downscaling (161) the medical imaging data (140) before processing the medical imaging data as the first input.

5. The method of claims 1 to 4,
   wherein the text prompt (120) is fixedly predefined for a single pathology.

6. The method of claims 1 to 4,
   wherein the text prompt (120) is established based on a user input indicative of a given pathology selected from a plurality of candidate pathologies.

7. A method of executing a training of an image-text deep neural network algorithm, the image-text deep neural network algorithm processing a first input and a second input, the first input accepting medical imaging data of an observation region of a patient, the second input accepting text prompts indicative of a pathology of the patient,

   the image-text deep neural network algorithm determining patch feature embeddings (181-189) for multiple spatial patches (141-149) of the first input (155) and further determining a text feature embedding (123) for the second input (156),

wherein the image-text deep neural network algorithm (150) provides, based on comparisons (165) of each of the patch feature embeddings (181-189) and the text feature embedding (123), predictions (191-199) of a presence of absence of a finding of the pathology in the each of the multiple spatial patches (141-149),

wherein the method comprises:

- executing (920) the training of the image-text deep neural network algorithm (150) using a training dataset, the training dataset comprising a plurality of training samples, each training sample comprising a respective medical imaging data, an associated text prompt, and an associated ground-truth mask labeling regions of the respective observation region regarding a presence or absence of a finding of the respective pathology.

8. The method of claim 7,

wherein the training refines weights of the image-text deep neural network algorithm based on a patch-wise loss, wherein the patch-wise loss is calculated, for a given training sample of the training dataset, based on a difference between the ground-truth mask and the comparisons of the patch feature embeddings and the text feature embedding.

9. The method of claim 7 or 8,

wherein the training is a fine-tuning training, wherein the fine-tuning training is preceded by an initial training of the image-text deep neural network algorithm, wherein the method further comprises:

- executing (910) the initial training of the image-text deep neural network algorithm using a further training dataset, the further training dataset comprising a plurality of further training samples, each further training sample comprising a respective medical imaging data and an associated text prompt.

10. The method of claim 9,

wherein the initial training refines weights of the image-text deep neural network based on multiple contrastive losses, wherein given one of the multiple contrastive losses is calculated, for a given training sample of the training dataset, based on a comparison between a combination (271) of the patch feature embeddings (181-189) determined for each spatial patch (141-148) of the respective medical imaging data with the text feature embedding (123).

11. The method of claim 10, wherein another one of the multiple contrastive losses is calculated, for the given training sample of the training dataset, based on a comparison between a global feature embedding (180) determined by a transformer encoder with the text feature embedding (123).

12. The method of any one of claims 9 to 11, wherein a number of the further training samples in the further training dataset is larger by a factor of thousand than a number of the training samples in the training dataset.

13. The method of any one of claims 7 to 12, wherein the training samples of the plurality of training samples of the training dataset describe a single pathology.

14. The method of any one of the preceding claims, wherein the medical imaging data comprises a chest X-ray image.

15. A processing device configured to execute the method of any one of the preceding claims.

FIG 1

## FIG 2

## FIG 3

FIG 4

181

182

183

184

185

186

187

188

189

270

271

FIG 5

950

955

960

FIG 6

701

702

703

704

FIG 7

831

832

821

823

811

Europäisches
Patentamt

European
Patent Office

Office européen
des brevets

## EUROPEAN SEARCH REPORT

**Application Number**

EP 24 17 1525

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIZVI S A ET AL: "Local Contrastive Learning for Medical Image Recognition", ARXIV.ORG, CORNELL UNIVERSITY LIBRARY, 201 OLIN LIBRARY CORNELL UNIVERSITY ITHACA, NY 14853, 24 March 2023 (2023-03-24), XP091467900, * abstract * * page 126, line 1 - page 1240, line 13 * * figures 1,4,5 * | 1-15 | INV. G06T7/00 |
| A,D | TIU EKIN ET AL: "Expert-level detection of pathologies from unannotated chest X-ray images via self-supervised learning", NATURE BIOMEDICAL ENGINEERING, vol. 6, no. 12, 15 September 2022 (2022-09-15), pages 1399-1406, XP093215183, ISSN: 2157-846X, DOI: 10.1038/s41551-022-00936-9 Retrieved from the Internet: URL:https://www.nature.com/articles/s41551-022-00936-9> * the whole document * | 1-15 | |
| A,D | GHESU FLORIN C ET AL: "Quantifying and leveraging predictive uncertainty for medical image assessment", MEDICAL IMAGE ANALYSIS, OXFORD UNIVERSITY PRESS, OXOFRD, GB, vol. 68, 14 October 2020 (2020-10-14), XP086458602, ISSN: 1361-8415, DOI: 10.1016/J.MEDIA.2020.101855 [retrieved on 2020-10-14] * the whole document * | 1-15 | |

**TECHNICAL FIELDS SEARCHED (IPC)**

G06T

-/--

The present search report has been drawn up for all claims

| Place of search | Date of completion of the search | Examiner |
|---|---|---|
| Munich | 15 October 2024 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 17 1525

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIANJUN HAN ET AL: "Multiscale Progressive Text Prompt Network for Medical Image Segmentation", ARXIV.ORG, CORNELL UNIVERSITY LIBRARY, 201 OLIN LIBRARY CORNELL UNIVERSITY ITHACA, NY 14853, 30 June 2023 (2023-06-30), XP091552113, * the whole document * | 1-15 | |

TECHNICAL FIELDS
SEARCHED        (IPC)

The present search report has been drawn up for all claims

| Place of search | Date of completion of the search | Examiner |
|---|---|---|
| Munich | 15 October 2024 | Klemencic, Ales |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MANUELA DANIELA DANU et al.** Generation of radiology findings in chest x-ray by leveraging collaborative knowledge. *arXiv preprint arXiv:2306.10448*, 2023
- **FLORIN C GHESU et al.** Quantifying and leveraging predictive uncertainty for medical image assessment. *Medical Image Analysis*, 2021, vol. 68, 101855
- **JAN RUDOLPH et al.** Artificial intelligence in chest radiography reporting accuracy: added clinical value in the emergency unit setting without 24/7 radiology coverage. *Investigative Radiology*, 2022, vol. 57 (2), 90-98
- **DOSOVITSKIY, ALEXEY et al.** An image is worth 16x16 words: Transformers for image recognition at scale. *arXiv preprint arXiv:2010.11929*, 2020
- Learning transferable visual models from natural language supervision. **ALEC RADFORD et al.** International conference on machine learning. PMLR, 2021, 8748-8763
- **EKIN TIU et al.** Expert-level detection of pathologies from unannotated chest x-ray images via self-supervised learning. *Nature Biomedical Engineering*, 2022, vol. 6 (12), 1399-1406